# EUROPEAN PATENT SPECIFICATION

(11) **EP 1 642 759 B1**
(45) Date of publication and mention of the grant of the patent: **30.06.2010**
(21) Application number: 04255427.9
(22) Date of filing: 08.09.2004
(51) Int. Cl.: B60K 7/00, B60L 15/20

(54) **Electrical drive system with double acting type electric motors and differential**
Elektrisches Antriebssystem mit doppelt wirkenden Elektromotoren und Ausgleichsgetriebe
Système d'entraînement électrique avec des moteurs éléctriques à double effet et un engrenage différentiel

(43) Date of publication of application: 05.04.2006
(60) Divisional application: 10158799.6
(73) Proprietor: Tai-Her, Yang, Si-Hu Town Dzan-Hwa (TW)
(72) Inventor: Tai-Her, Yang, Si-Hu Town Dzan-Hwa (TW)
(74) Representative: Pratt, David Martin

(56) References cited:
- EP-A- 0 695 662
- DE-A1- 4 401 894
- DE-A1- 4 434 237
- DE-A1- 10 006 743
- FR-A- 2 790 615
- JP-A- 2004 040 975
- US-A- 2 787 747
- US-A- 3 771 032
- US-A- 4 122 377
- US-A- 5 384 521
- PATENT ABSTRACTS OF JAPAN vol. 2003, no. 12, 5 December 2003 (2003-12-05) -& JP 2004 088984 A (NISSAN MOTOR CO LTD), 18 March 2004 (2004-03-18)
- PATENT ABSTRACTS OF JAPAN vol. 018, no. 108 (M-1564), 22 February 1994 (1994-02-22) -& JP 05 305823 A (EKUOSU RES:KK), 19 November 1993 (1993-11-19)

## Description

The invention relates to a double-acting electrical machinery assembly having two double-acting electrical machines, each being of the interactive rotational type.

A conventional single motor-driven electric carrier usually relies on a differential driving device to drive its two side wheels to move forwards or backwards, or relies on differential driven turning operations in the same rotational directions. The disadvantages of the arrangement include the high cost of the additionally-installed differential transmission device, its large weight, and the existence of normal transmission loss.

JP 2004 088984 describes a vehicle drive gear.

Document US 2 787 747 disclosed a double-acting electrical machinery assembly according to the preamble of claim 1.

The present invention provides a double-acting electrical machinery assembly comprising first and second double-acting electrical machines each of which is constituted by first and second interactive rotational electrical machinery assembly structures, each first interactive rotational electrical machinery assembly structure being coupled to a respective load, and the two second interactive rotational electrical machinery assembly structures being coupled together, wherein the first and second double-acting electrical machines are coupled together via a differential device, wherein the differential device is constituted by a differential gear train having a first gear mounted on a first rotation shaft coupled to the first double-acting electrical machine, a second gear mounted on a second rotation shaft coupled to the second double-acting electrical machine, third and fourth gears mounted on respective third and fourth rotation shafts, and a differential ring frame in common driving engagement with the third and fourth rotation shafts;
characterised by a damping device at the differential acting side of the differential device, one side of the damping device being coupled with the differential ring frame, the other side of the damping device being locked to static parts such as a car body or a mechanism shell.

The invention will now be described in greater detail, by way of example, with reference to the drawings, in which:
Figure 1 is a block schematic diagram illustrating a power system constituted by a double-acting electrical machinery assembly.
Figure 2 is a block circuit diagram illustrating a speed reducer device installed between the output shaft and the load of the double-acting electrical machinery assembly of Figure 1.
Figure 3 is a block circuit diagram illustrating the parallel combined operation by two power systems.
Figure 4 is a block diagram of a double-acting electrical machinery assembly illustrating that its differential device is comprised of differential gears.
Figure 5 is a first preferred embodiment of a double-acting electrical machinery assembly illustrating that the differential acting side ring frame of the assembly of Figure 4 is further installed with damping devices.
Figure 6 illustrates that two interactive rotational electrical machinery assembly structures of a double-acting type electrical machinery assembly are respectively coupled with damping devices.
Figure 7 is a block diagram illustrating that the two interactive rotational electrical machines of the double-acting electrical machines assembly are respectively coupled with damping devices.
Figure 8 illustrates a double-acting electrical machinery assembly coupled with a wheel train through axial direction change transmission devices in mutual contrary rotational direction to constitute a repulsive differential driving power system.
Figure 9 illustrates a double-acting electrical machinery assembly respectively coupled with a wheel train in mutual contrary rotational directions to constitute a repulsive differential driving power system.

According to the invention, the repulsive differential driving double-acting type electrical machinery power system is comprised of twin double-acting type electrical machinery assembly each having a first interactive rotational electrical machinery assembly structure and a second interactive rotational electrical machinery assembly structure, and the double-acting type electrical machinery assembly is constituted by the AC or DC, brush-less or brushed, synchronous or asynchronous, cylindrical shaped or disk shaped cup shaped electrical machinery assembly, whereof its constituting methods includes: one interactive rotational electrical machinery assembly structure is coupled with the load while the other interactive rotational electrical machinery assembly structure is coupled with a differential unit to allow each aforesaid double-acting type electrical machinery assembly appear in back to back coupling with the differential device in any axial directions, and in case that any interactive rotational electrical machinery assembly structure undertakes a larger damping to cause rotational speed difference, such as for the case that when the vehicle is driving in a snaky road whereby to cause the two side wheels operated in different rotation speeds, due to the double-acting operating characteristics of the double-acting type electrical machinery assembly, the interactive rotational electrical machinery assembly structure coupled with the differential device is then imposed by a repulsive acting force, thereby the rotational speed difference can be adjusted by the differential device, therefore the repulsive differential driving double-acting type electrical machinery power system is characterized to drive the two side wheels moving forward, backward and differential driven turning operation in the same rotational directions.

The repulsive differential driving double-acting type electrical machinery power system is described in the following by taking the embodiment of a equal speed driving in the same direction or repulsive differential driving power system constituted by the twin double-acting type electrical machinery assembly constitute for snaky road driving:

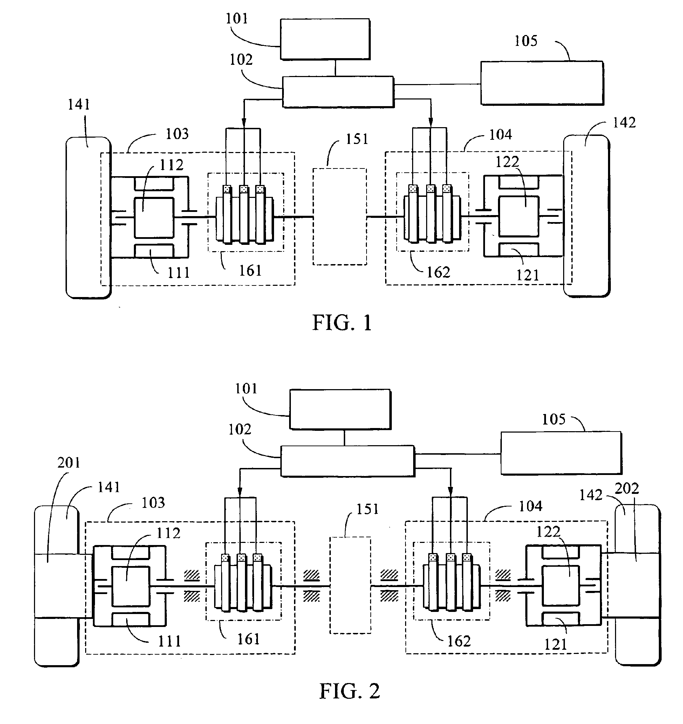

Figure 1 is a block schematic diagram illustrating a power system constituted by twin double-acting type electrical machinery, wherein it is mainly characterised in the following:
   an operating instructions input device 101 comprised of electromechanical or solid state electronic circuit components for generating analog or digital operating signals to control the driving control device 102; and, through the driving control device 102 further to control the twin double-acting type electrical machinery assembly 103, 104 for part or all of the following functions: positive or reverse rotations, speed changes, motor function, generator function, regeneration braking functioning operation, input/output current limitations, and electromagnetic effect locking functions;
   a power supply and storing device 105 constituted by a municipal power system, engine driven generator units, a battery set, or a flywheel type accumulated power generation device for supplying power through the driving control device 102 to drive the double-acting type electrical machinery assembly for motor function operation and for absorbing or storing power from the double-acting type electrical machinery assembly when it is employed for generator function operation;
   a driving control device 102 constituted by electromechanical or solid state electronic power components for receiving the commands from the operating instructions input device 101; and, through the driving control device 102, further to control the twin double-acting type electrical machinery assembly 103, 104 for part or all of the following functions; positive or reverse rotations, speed changes, motor function, generator function, regeneration braking functioning operation, input/output current limitations, electromagnetic effect locking functions. The double-acting type electrical machinery assembly driving device can be by a common driving control device 102 to drive the multiple double-acting type electrical machinery assembly simultaneously; or, by using the individual driving control device, to drive the individual double-acting type electrical machinery assembly according to system requirements. If the double-acting type electrical machinery assembly is a DC brushed electrical machinery, then the driving control device 102 is constituted by the electromechanical or solid state electronic power components to provide the motor or generator functions operation control circuit device or the polarity switch direction control device by providing an analog modulating control or a chopped wave modulating control on the armature, or the field magnetic intensity modulating control, or mixture of both. If the double-acting type electrical machinery assembly is a synchronous or asynchronous brush-less electrical machinery, or a slip ring type synchronous or asynchronous electrical machinery, then the driving circuit of the inverter type driving control device constituted by the electromechanical or solid state components is employed to control the double-acting type electrical machinery assembly for motor or generator function operations;
   the twin double-acting type electrical machinery assembly 103, 104 is constituted by the AC or DC, brush-less or brushed, synchronous or asynchronous, cylindrical shaped or disk shaped cup shaped electrical machinery, whereof the twin double-acting type electrical machinery assembly is composed of the first reciprocating rotational electrical machinery assembly structures 111, 121 for motor function or generator function interactive operations, and by the second interactive rotational electrical machinery assembly structures 112, 122, and the rotational conducting ring brushes 161, 162 for power input or output as well as the related components of the rotating shaft, bearing, and cooling devices etc. The first interactive rotational electrical machinery assembly structures 111, 121 of the individual double-acting type electrical machinery assembly are respectively coupled with the loads 141, 142; while the second interactive rotational electrical machinery assembly structures 112, 122 (which operated corresponding to the first interactive rotational electrical machinery assembly structures) are respectively coupled with the differential acting device 151, whereby the interactive relationships between the twin double-acting type electrical machinery assembly 103, 104 and the differential acting device 151 constitute the operation of the repulsive differential driving power system;
   the loads 141, 142 are the driving wheels or track driving wheels of carriers such as vehicles or other loads which are respectively installed at the two sides of vehicles for driving the carrier to move forwards or backwards or differential driven turning operations in the same directions, or for positive or reverse rotational and differential driving outputs in different rotating directions;

The rotation differences of the repulsive differential driving power system constituted by the aforesaid double-acting type electrical machinery assembly 103, 104 and the differential device 151 can be adjusted through the differential device 151 in the case of different rotations output of the twin double-acting type electrical machinery assembly under loading variations.

Besides, due to the different requirements for the various load operating conditions and rotational speed ranges, the speed reducer devices 201, 202 can be installed as required between the output shafts of the twin double-acting type electrical machinery assembly embodied accordingly 103, 104 and the loads 141, 142; wherein Figure 2 illustrates a speed reducer device installed between the double-acting type electrical machinery assembly output shaft and the load.

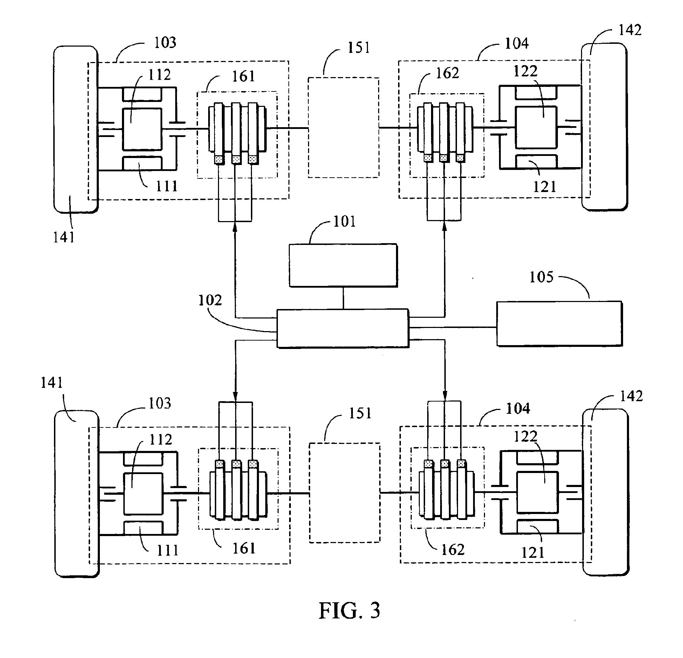

The repulsive differential driving double-acting type electrical machinery power system can be constituted by twin double-acting type electrical machinery assembly into a power system, and can be further constituted by the parallel combination of two or more than two systems. Thus, Figure 3 illustrates a repulsive differential driving double-acting type electrical machinery power system illustrating the parallel combined operation of two power systems, whereof each system is respectively comprised of a twin double-acting type electrical machinery assembly 103, 104 combined with a differential device 151 to constitute a repulsive differential driving power system, whereby the two repulsive differential driving power system is driven by the driving control device 102; and wherein it is mainly comprised of the following:
an operating instructions input device 101 comprised of electromechanical or solid state electronic circuit components for generating analog or digital operating signals to control the driving control device 102; and, through the driving control device 102, further to control the double-acting type electrical machinery assembly 103, 104 for part or all of the following functions: positive or reverse rotations, speed changes, motor function, generator function, regeneration braking functioning operation, input/output current limitations, electromagnetic effect locking functions;
a power supply and storing device 105 constituted by a municipal power system, engine-driven generator units, a battery set, or a flywheel type accumulated power generation device for supplying power through the driving control device 102 to drive the double-acting type electrical machinery assembly for motor function operation, and for absorbing or storing power from the double-acting type electrical machinery assembly when it is employed for generator function operation;
a driving control device 102 constituted by electromechanical or solid state electronic power components for receiving the commands from the operating instructions input device 101; and, through the driving control device 102, further to control the double-acting type electrical machinery assembly 103, 104 for part or all of the following functions: positive or reverse rotations, speed changes, motor function, generator function, regeneration braking functioning operation, input/output current limitations, electromagnetic effect locking functions; thereof the double-acting type electrical machinery assembly driving device can be by a common driving control device 102 to drive the multiple double-acting type electrical machinery assembly simultaneously; or, by the individual driving control device, to drive the individual double-acting type electrical machinery assembly according to system requirements. If the double-acting type electrical machinery assembly is a DC brushed electrical machinery, then the driving control device 102 is constituted by electromechanical or solid state electronic power components to provide motor or generator functions operation control circuit device, or a polarity switch direction control device by providing analog modulating control or chopped wave modulating control to the armature, or the field magnetic intensity modulating control, or mixture of both. If the double-acting type electrical machinery assembly type is a synchronous or asynchronous brushless electrical machinery, or a slip ring type synchronous or asynchronous electrical machinery, then the driving circuit of the inverter type driving control device constituted by electromechanical or solid state components is employed to control the double-acting type electrical machinery assembly for motor or generator function operations;
the twin double-acting type electrical machinery assembly 103, 104 constitutes a first repulsive differential driving power system and a second repulsive differential driving power system. The double-acting type electrical machinery assembly includes AC or DC, brush-less or brushed, synchronous or asynchronous, cylindrical-shaped or disk-shaped cup-shaped electrical machinery. The individual double-acting type electrical machinery assembly is mainly comprised of the first interactive rotational electrical machinery assembly structures 111, 121 for motor function or generator function interactive operations, and the second interactive rotational electrical machinery assembly structures 112, 122, and the rotational conducting ring brushes 161, 162 for power input or output, as well as the related components of the rotating shafts, bearings, and cooling devices etc. The first interactive rotational electrical machinery assembly structures 111, 121 of the individual double-acting type electrical machinery assembly are respectively coupled with the loads 141, 142, while the second interactive rotational electrical machinery assembly structures 112, 122 (which operate to correspond to the first interactive rotational electrical machinery assembly structures) are respectively coupled with the differential acting device 151, whereby the twin double-acting type electrical machinery assembly 103, 104 and the differential acting device 151 constitute a repulsive differential driving power system;
the loads 141, 142 are the driving wheels or track driving wheels of carriers such as vehicles or other loads which are respectively installed at the two sides of vehicles for driving the carrier to move forwards or backwards or differential driven turning operations in the same directions, or for positive or reverse rotational and differential driving outputs in different rotating directions;

The differential device 151 coupled with the double-acting type electrical machinery assembly can be selected as required to be constituted by differential gears, or can be further installed with a damping device at the differential acting side of the differential gear as in conventional vehicles, thereby to reduce the disadvantage of losing both side torque outputs simultaneously in case of a single side load slip; or to ensure that the load is directly driven by the first interactive rotational electrical machinery assembly structures 111, 121 of the twin double-acting type electrical machinery assembly 103, 104, while the second interactive rotational electrical machinery assembly structures 112, 122 are coupled with damping devices.

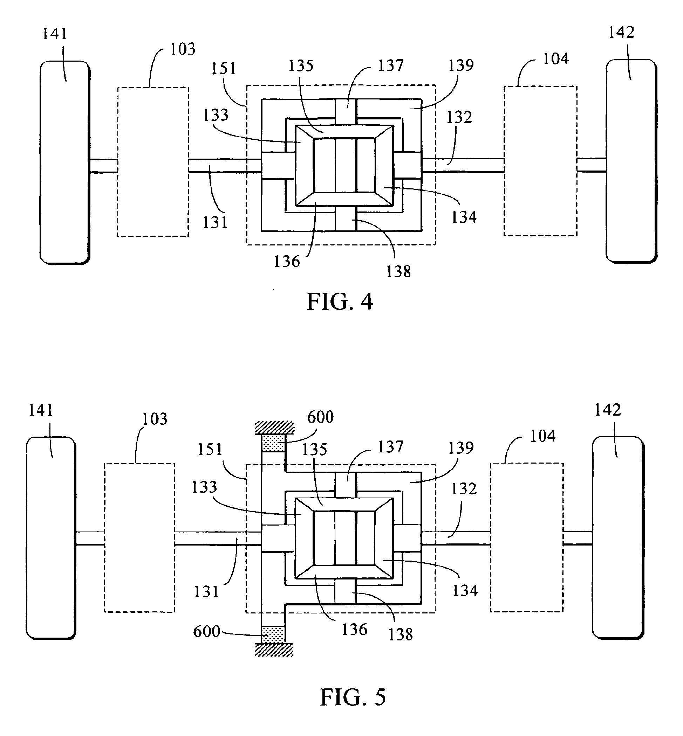

Figure 4 illustrates a differential device comprised of differential gears, wherein the gears 133, 134, 135, 136 are mutually coupled to constitute a differential wheel train, whereof a rotation shaft 131 of the gear 133 and the gear 134 along with its rotation shaft 132 are respectively coupled with the individual double-acting type electrical machinery assembly 103, 104; while the rotation shaft 137 of the gear 135 and the rotation shaft 138 of the gear 136 commonly drive the differential ring frame 139 for differential rotations.
Figure 5 is a first preferred embodiment illustrating that the differential acting side ring frame of Figure 4 is further installed with a damping device. The damping device 600 in Figure 5 can be coupled radially or axially or conically between the differential ring frame 139 and static parts such as a car body or a mechinism shell, etc. The damping device 600 may be one which consists of rotational damping means such as a fluid energy source, a mechanical friction source, an electromagnetic generation source, or an eddy current effect device. Alternatively, where appropriate, it may consist of resiliently-applied rotational damping means such as a fluid energy source capable of storing and releasing energy, or a mechanical spring. One side of the damping device 600 is coupled with the differential ring frame 139, while the other side of the damping device is locked to static parts such as the car body or mechanism shells, etc.

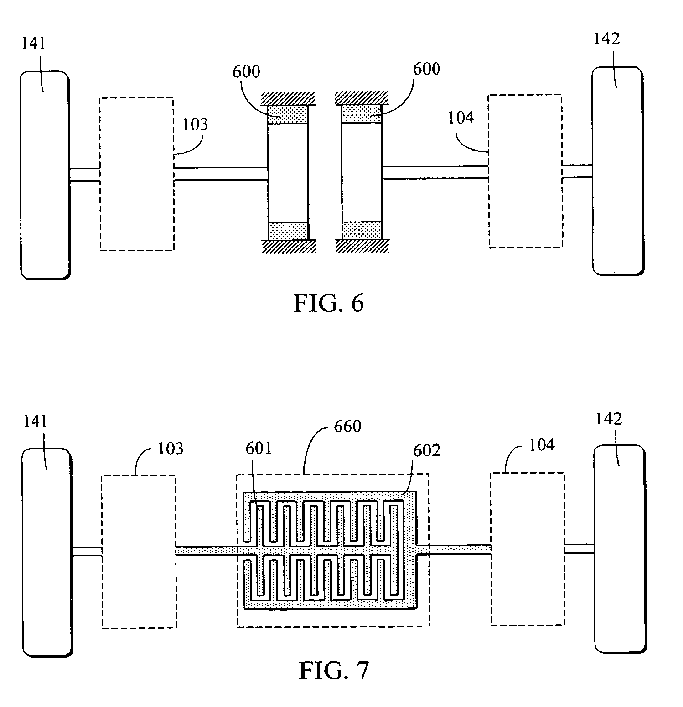

Figure 6 illustrates that the two interactive rotational electrical machinery assembly structures of the twin double-acting type electrical machinery assembly are respectively coupled with the load and with damping devices. It is **characterised in that** one interactive rotational electrical machinery assembly structure of the double-acting type electrical machinery assembly is directly coupled (or indirectly coupled through a transmission device) with the load, while the other interactive rotational electrical machinery assembly structure of the electrical machinery assembly is individually coupled to one side of the corresponding operating structure of the damping device 600, while the other side of the damping device 600 is locked to a static part such as the car body or mechanism shells, etc. The damping device 600 may be one which consists of rotational damping means such as a fluid energy source, a mechanical friction source, an electromagnetic generation device, or an eddy current effect device; or, where appropriate, it may consist of resiliently applied rotational damping means such as a fluid energy source capable of storing and releasing energy, or a mechanical spring.
Figure 7 illustrates that the twin interactive rotational electrical machinery assembly structures of the twin double-acting type electrical machinery assembly are respectively coupled with damping devices, wherein it is **characterised in that** one interactive rotational electrical machinery assembly structure of the double-acting type electrical machinery assembly is directly coupled (or indirectly coupled through a transmission device) with the load; while the other interactive rotational electrical machinery assembly structure of the electrical machinery assembly is individually coupled to one side of the damping devices 601, 602; while the other sides of the damping device 601, 602 are mutually coupled, so that the damping mechanism features differential damping effects, and comprises structurally, be it in a fluid power mode, in a mechanical friction mode, in an electromagnetic generation mode, or in an eddy current effect mode, to present an intervening way between the twin interactive rotational electrical machinery assembly 601, 602, and will account for an overall slidable damper 660. This damper 660 is capable of producing differentially-directed loading conditions to bear upon the twin double-acting type electrical machinery assembly structured accordingly, and substantiates a repulsive differential double-acting electrical machinery assembly system.

In case of adopting the damping devices, the repulsive differential driving double-acting type electrical machinery power system can be constituted by twin double-acting type electrical machinery assembly; or it can be constituted by a twin or more than a twin double-acting type electrical machinery assembly, wherein one interactive rotational electrical machinery assembly structure of each double-acting type electrical machinery assembly is employed to drive the load, the corresponding other interactive rotational electrical machinery assembly structure can be back-to-back coupled in any axial direction with the common differential device.

In addition, for applications of the repulsive differential driving double-acting type electrical machinery power system in driving the load in the same rotational direction, the not-for load driving interactive rotational electrical machinery assembly structure of the double-acting type electrical machinery assembly can be coupled with the wheel train appearing in the interactive relationship of contrary rotational directions, whereby to accomplish the repulsive differential driving functions, or the not-for load driving interactive rotational electrical machinery assembly structure of the double-acting type electrical machinery assembly can be directly commonly coupled with the interactive wheel trains in the same rotational direction, or can be directly mutually coupled.

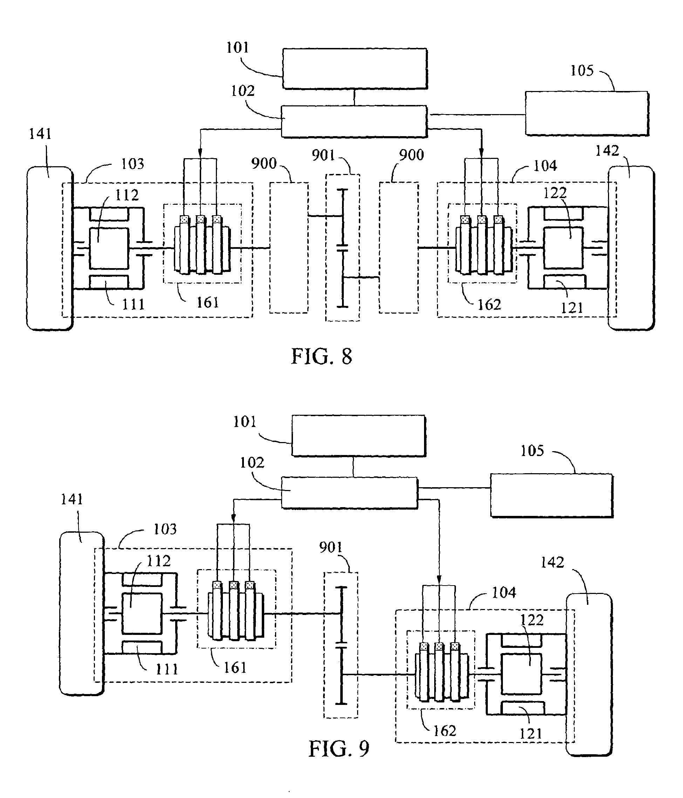

Figure 8 illustrates a twin double-acting type electrical machinery assembly coupled with a wheel train through the axial direction change transmission devices in mutual contrary rotational direction constitutes a repulsive differential driving power system, wherein it is mainly **characterised in that** the individual second interactive rotational electrical machinery assembly structures 112, 122 of the twin double-acting type electrical machinery assembly 103, 104, installed back-to-tack, are respectively coupled with the two input shafts of the wheel train 901 to provide an interactive relationship of contrary rotation directions through the axial direction change transmission device 900 constituted by a universal transmission device, an equal-speed universal transmission device or bevel gears, while the first interactive rotational electrical machinery assembly structures 111, 121 of the twin double-acting type electrical machinery assembly drive the load in the same rotational direction.

Figure 9 illustrates two back-to-back installed double-acting type electrical machinery assemblies are respectively coupled with a wheel train in mutual contrary rotational directions, thereby to constitute a repulsive differential driving power system, wherein it is mainly **characterised in that** the individual second interactive rotational electrical machinery assembly structures 112, 122 of the twin double-acting type electrical machinery assembly 103, 104, installed back-to-back, are respectively coupled with the two input shafts of the wheel train 901 to provide an interactive relationship of contrary rotation directions; while the first interactive rotational electrical machinery assembly structures 111, 121 of the twin double-acting type electrical machinery assembly drive the load in the same rotational direction. The twin double-acting type electrical machinery assembly as shown in the preferred embodiment of Figure 9 can be back-to-back installed, it can be parallel installed at the same side, thereby to combine with the interactive wheel trains in contrary rotation directions thereby to constitute a repulsive differential driving double-acting type electrical machinery power system.

As summarised from the above descriptions, and by comparing the design with the conventional system of a single drive motor through a single input shaft and further through a differential wheel train to the two output shafts, it shows that the differential wheel trains of the conventional differential wheel train power systems only operate at differential output, but the input side pinion gear is always rotated with low efficiency (the efficiency of pinion gear is about 50%∼80% ), so that the system only operates at differential output. An advantage of the system of the invention is that there is no pinion gear loss in normal operation.

## Claims

1. A double-acting electrical machinery assembly comprising first and second double-acting electrical machines (103, 104) each of which is constituted by first and second interactive rotational electrical machinery assembly structures (111, 112 and 121, 122), each first interactive rotational electrical machinery assembly structure being coupled to a respective load (141, 142), and the two second interactive rotational electrical machinery assembly structures being coupled together, wherein the first and second double-acting electrical machines are coupled together via a differential device (151), wherein the differential device is constituted by a differential gear train (133, 134, 135, 136 and 139) having a first gear (133) mounted on a first rotation shaft (131) coupled to the first double-acting electrical machine (103), a second gear (134) mounted on a second rotation shaft (132) coupled to the second double-acting electrical machine (104), third and fourth gears (135, 136) mounted on respective third and fourth rotation shafts (137, 138), and a differential ring frame (139) in common driving engagement with the third and fourth rotation shafts;
**characterised by** a damping device (600) at the differential acting side of the differential device, one side of the damping device being coupled with the differential ring frame, the other side of the damping device being locked to static parts such as a car body or a mechanism shell.

2. An assembly as claimed in claim 1, wherein the differential device (151) is such that each double-acting type electrical machine (103, 104) is in back-to-back coupling with the differential device in axial directions, whereby, if one of the interactive rotational electrical machines undertakes a larger damping to cause a rotational speed difference, then due to the double-acting operating characteristics of the double-acting type electrical machinery assembly, there is a repulsive acting force, and thereby the rotational speed difference can be adjusted by the differential device, and the repulsive differential driving double-acting type electrical machinery assembly is adapted to drive two side wheels moving forwards and backwards, and provide differential driven turning operation in the same rotational directions.

3. An assembly as claimed in claim 1 or claim 2, further comprising an operating instructions input device (101) for generating analog or digital operating signals to control a driving control device (102) for controlling the double-acting type electrical machines (103, 104) to provide part or all of the following functions: positive or reverse rotations, speed changes, motor functions, generator functions, regeneration braking functioning operations, input/output current limitations, and electromagnetic effect locking functions.

4. An assembly as claimed in claim 3, wherein the operating instructions input device (101) is an electromechanical component or a solid state electronic component.

5. An assembly as claimed in claim 3 or claim 4, further comprising a power supply and storing device (105) for supplying power through the driving control device (102) to drive the double-acting type electrical machines (103, 104) for motor function operation and for absorbing or storing power from the double-acting type electrical machines for generator function operation.

6. An assembly as claimed in claim 5, wherein the power supply and storing device (105) is a municipal power system, engine-driven generator units, a battery set or a flywheel accumulator power generation device.

7. An assembly as claimed in any one of claims 3 to 6, wherein the driving control device (102) is constituted by electromechanical or solid state electronic power components for receiving operating signals from the operating instructions input device (101), whereby the double-acting electrical machinery assembly can use a common driving control device (102) to drive the double-acting type electrical machines (103, 104) simultaneously, or by an individual driving control device to drive the individual double-acting type electrical machines according to system requirements.

8. An assembly as claimed in any one of claims 3 to 7, wherein if the double-acting type electrical machinery assembly is of the DC brushed type, then the driving control device (102) is constituted by electromechanical or solid state electronic power components to be a motor or generator functions operation control circuit device, or a polarity switch direction control device by providing an analog modulating control or chopped wave modulating control to an armature, or a field magnetic intensity modulating control, or mixture thereof; and, if the double-acting type electrical machinery assembly type is of the synchronous or asynchronous brush-less type, or a slip ring synchronous or asynchronous type, then the driving circuit of an inverter driving control device constituted by the electromechanical or solid state components is employed to control the double-acting type electrical machinery assembly for motor or generator function operations.

9. An assembly as claimed in any one of claims 1 to 8, wherein the double-acting type electrical machines (103, 104) are constituted by AC or DC, brush-less or brushed, synchronous or asynchronous, cylindrical-shaped or disk-shaped cup-shaped electrical machines having rotational conducting ring brushes (161, 162) for power input or output as well as related components such as rotating shafts, bearings, and cooling devices whereby the interactive relationships between the double-acting type electrical machines (103, 104) and the differential device (151) constitute the operation of a repulsive differential driving power system.

10. An assembly as claimed in any one of claims 1 to 9, wherein the loads (141, 142) are the driving wheels or the track driving wheels of a carrier such as a vehicle, or other loads which are respectively installed at the two sides of a vehicle for driving the carrier to move forwards or backwards, or for differential driven turning operations in the same directions, or for positive or reverse rotational and differential driving outputs in different rotating directions.

11. An assembly as claimed in any one of claims 1 to 10, further comprising speed reducer devices (201, 202) installed between output shafts of the double-acting electrical machines (103, 104) and the loads (141, 142).

12. An assembly as claimed in any one of claims 1 to 11, wherein the damping device consists of rotational damping means such as a fluid energy source, a mechanical friction source, an electromagnetic generation source, an eddy current device, or a resiliently-applied rotational damping means such as a fluid energy source capable of storing and releasing energy, or a mechanical spring.

13. An assembly as claimed in any one of claims 1 to 12, wherein the double-acting electrical machines (103, 104) are coupled with the differential gear train (901) by an axial direction change transmission device (900) in mutual contrary rotational directions to constitute a repulsive differential driving power system, wherein the individual second interactive rotational electrical machinery assembly structures (112, 122) are respectively coupled with the two input shafts of the differential gear train (901) to provide an interactive relationship of contrary rotational directions through the axial direction change transmission device (900), which is constituted by a universal transmission device or an equal-speed universal transmission device or bevel gears, while the first interactive rotational electrical machinery assembly structures (111, 121) drive the loads (141, 142) in the same rotational direction.

14. An assembly as claimed in any one of claims 1 to 12, wherein the double-acting electrical machines (103, 104) are installed back-to-back and are respectively coupled with the differential gear train (901) in mutual contrary rotational directions thereby to constitute a repulsive differential driving power system, and wherein the individual second interactive rotational electrical machinery assembly structures (112, 122) are respectively coupled with the two input shafts of the differential gear train to provide an interactive relationship with contrary rotational directions, while the first interactive rotational electrical machinery assembly structures (111, 121) drive the loads (141, 142) in the same rotational direction.

15. An assembly as claimed in any one of claims 1 to 12, wherein the double-acting electrical machines (103, 104) are parallel installed at the same side, thereby to combine with the differential gear train (901) in contrary rotational directions, thereby to constitute a repulsive differential driving double-acting type electrical machinery power system.

## Patentansprüche

1. Doppelt wirkende elektrische Maschinenanordnung, enthaltend erste und zweite doppelt wirkende elektrische Maschinen (103, 104), von denen jede aus einer ersten und zweiten wechselwirkenden rotierenden elektrischen Maschinenanordnungsstrukturen (111, 112 und 121, 122) aufgebaut ist, wobei jede erste wechselwirkende rotierende elektrische Maschinenanordnungsstruktur mit einer entsprechenden Last (141, 142) verbunden ist und die zwei zweiten wechselwirkenden rotierenden elektrischen Maschinenanordnungsstrukturen miteinander verbunden sind, wobei die ersten und zweiten doppelt wirkenden elektrischen Maschinen miteinander über eine Differentialvorrichtung (151) verbunden sind, wobei die Differentialvorrichtung aus einem Differentialgetriebezug (133, 134, 135, 136 und 139) aufgebaut ist, der ein erstes Zahnrad (133), das auf einer mit der ersten doppelt wirkenden elektrischen Maschine (103) verbundenen ersten Rotationswelle (131) montiert ist, ein zweites Zahnrad (134), das auf einer mit der zweiten doppelt wirkenden elektrischen Maschine (104) verbundenen zweiten Rotationswelle (132) montiert ist, ein drittes und viertes Zahnrad (135, 136), die auf einer entsprechenden dritten und vierten Rotationswelle (137, 138) montiert sind, und einen Differentialringrahmen (139) in gemeinsamen Antriebseingriff mit der dritten und vierten Rotationswelle aufweist,
**gekennzeichnet durch** eine Dämpfungsvorrichtung (600) auf der Differentialwirkungsseite der Differentialvorrichtung, wobei eine Seite der Dämpfungsvorrichtung mit dem Differentialringrahmen verbunden ist, die andere Seite der Dämpfungsvorrichtung an statischen Teilen arretiert ist, wie etwa einer Autokarosserie oder einem Gerätegehäuse.

2. Anordnung nach Anspruch 1, bei der die Differentialvorrichtung (151) dergestalt ist, dass sich jede doppelt wirkende elektrische Maschine (103, 104) mit der Differentialvorrichtung in axialen Richtungen in einer Verbindung Rücken zu Rücken befindet, wodurch, wenn eine der wechselwirkenden rotierenden elektrischen Maschinen eine größere Dämpfung erfährt, um einen Drehgeschwindigkeitsunterschied zu bewirken, dann infolge der doppelt wirkenden Betriebseigenschaften der doppelt wirkenden elektrischen Maschinenanordnung eine repulsiv wirkende Kraft besteht und **dadurch** der Drehgeschwindigkeitsunterschied durch die Differentialvorrichtung eingestellt werden kann, und die repulsiv ausgleichende, doppelt wirkende elektrische Maschinenanordnung dazu geeignet ist, zwei seitliche Räder anzutreiben, die sich vorwärts und rückwärts bewegen, und unterschiedliche Drehbewegungen in der gleichen Drehrichtung bereitzustellen.

3. Anordnung nach Anspruch 1 oder Anspruch 2, die darüber hinaus eine Betriebsanweisungs-Eingabevorrichtung (101) zur Erzeugung analoger oder digitaler Betriebssignale enthält, um eine Antriebssteuervorrichtung (102) zur Steuerung der doppelt wirkenden elektrischen Maschinen (103, 104) zu steuern, um einen Teil oder alle der folgenden Funktionen bereitzustellen: positive oder umgekehrte Drehungen, Änderungen der Geschwindigkeit, Motorfunktionen, Generatorfunktionen, Nutzbremsfunktionen, Eingangs- und Ausgangsstrom-Begrenzungen und Funktionen zur Blockierung elektromagnetischer Effekte.

4. Anordnung nach Anspruch 3, bei der die Betriebsanweisungs-Eingabevorrichtung (101) eine elektromechanische Komponente oder eine Festkörperelektronikkomponente ist.

5. Anordnung nach Anspruch 3 oder Anspruch 4, die darüber hinaus eine Stromzuführungs- und -speichervorrichtung (105) zur Zuführung von Strom über die Antriebssteuervorrichtung (102), um die doppelt wirkenden elektrischen Maschinen (103, 104) für die Motorfunktion anzutreiben und für die Generatorfunktion Strom von den doppelt wirkenden elektrischen Maschinen aufzunehmen oder zu speichern.

6. Anordnung nach Anspruch 5, bei der die Stromzuführungs- und -speichervorrichtung (105) ein kommunales Stromversorgungssystem, motorgesteuerte Generatoreinheiten, ein Batteriesatz oder eine Schwungradspeicher-Stromerzeugungsvorrichtung ist.

7. Anordnung nach einem der Ansprüche 3 bis 6, bei der die Antriebssteuervorrichtung (102) aus elektromechanischen Komponenten oder Festkörper-Elektronikkomponenten zur Aufnahme von Betriebssignalen von der Betriebsanweisungs-Eingabevorrichtung (101) aufgebaut ist, wodurch die doppelt wirkende elektrische Maschinenanordnung eine gemeinsame Antriebssteuervorrichtung (102) verwenden kann, um die doppelt wirkenden elektrischen Maschinen (103, 104) simultan anzutreiben, oder aus einer individuellen Antriebssteuervorrichtung, um die individuellen doppelt wirkenden elektrischen Maschinen gemäß den Systemanforderungen anzutreiben.

8. Anordnung nach einem der Ansprüche 3 bis 7, bei der, wenn die doppelt wirkende elektrische Maschinenanordnung vom Gleichstrom-Bürstentyp ist, die Antriebssteuervorrichtung (102) dann aus elektromechanischen Komponenten oder Festkörper-Elektronikleistungskomponenten aufgebaut ist, um eine Motor- oder Generatorbetriebssteuerschaltungsvorrichtung zu sein, oder eine Polaritätswechselsteuervorrichtung durch Vorsehen einer Analog-Modulationssteuerung oder einer Chopped-Wave-Modulationssteuerung an einer Armatur, oder einer Feldmagnetintensitäts-Modulationssteuerung oder einer Mischung daraus, und wenn die doppelt wirkende elektrische Maschinenanordnung vom bürstenlosen Synchron- oder Asynchrontyp ist oder vom Schleifring-Synchron- oder -Asynchrontyp ist, dann die Antriebssteuervorrichtung einer aus den elektromechanischen Komponenten oder Festkörper-Elektronikkomponenten aufgebauten Inverterantriebssteuervorrichtung verwendet wird, um die doppelt wirkende elektrische Maschinenanordnung für Motor- oder Generatorfunktionen zu steuern.

9. Anordnung nach einem der Ansprüche 1 bis 8, bei der die doppelt wirkenden elektrischen Maschinen (103, 104) aus Wechselstrom- oder Gleichstrom-, bürstenlosen oder Bürsten-, Synchron- oder Asynchron-, zylinderförmigen oder scheibenförmigen topfförmigen elektrischen Maschinen bestehen, die leitende Drehringbürsten (161, 162) zur Stromzuführung oder Stromabgabe sowie zugehörige Komponenten wie etwa Drehwellen, Lager und Kühlvorrichtungen aufweisen, wodurch die Wechselwirkungsbeziehung zwischen den doppelt wirkenden elektrischen Maschinen (103, 104) und der Differentialvorrichtung (151) die Funktion eines repulsiv ausgleichenden Treibkraftsystems bilden.

10. Anordnung nach einem der Ansprüche 1 bis 9, bei der die Lasten (141, 142) die Antriebsräder oder die Schienenantriebsräder eines Beförderers wie etwa eines Fahrzeugs sind, oder andere Lasten, die jeweils an den zwei Seiten eines Fahrzeugs zum Antrieb des Beförderers installiert sind, um sich vorwärts oder rückwärts zu bewegen, oder zur ausgleichenden Drehbewegung in gleichen Richtungen oder für positive oder umgekehrte Dreh- und Ausgleichsbewegungen in unterschiedlichen Drehrichtungen.

11. Anordnung nach einem der Ansprüche 1 bis 10, die darüber hinaus Geschwindigkeitsverminderungsvorrichtungen (201, 202) enthält, die zwischen Arbeitswellen der doppelt wirkenden elektrischen Maschinen (103, 104) und den Lasten (141, 142) installiert sind.

12. Anordnung nach einem der Ansprüche 1 bis 11, bei der die Dämpfungsvorrichtung aus Drehdämpfungsmitteln wie etwa einer Quelle für Fluidenergie, einer Quelle für mechanischen Reibung, einer Quelle zur Erzeugung von Elektromagnetismus, einer Wirbelstromvorrichtung, oder aus einem elastischen Drehdämpfungsmittel wie etwa einer Quelle für Fluidenergie, das in der Lage ist, Energie zu speichern und freizusetzen, oder aus einer mechanischen Feder besteht.

13. Anordnung nach einem der Ansprüche 1 bis 12, bei der die doppelt wirkenden elektrischen Maschinen (103, 104) mit dem Differentialgetriebezug (901) durch eine Axialrichtungsänderungstransmissionsvorrichtung (900) in wechselseitig entgegengesetzten Drehrichtungen verbunden sind, um ein repulsiv ausgleichendes Treibkraftsystem zu bilden, wobei die individuellen zweiten wechselwirkenden rotierenden elektrischen Maschinenanordnungsstrukturen (112, 122) jeweils mit den zwei Eingangswellen des Differentialgetriebezugs (901) verbunden sind, um eine Wechselwirkungsbeziehung der entgegengesetzten Drehrichtungen über die Axialrichtungsänderungstransmissionsvorrichtung (900) bereitzustellen, die aus einer Universaltransmissionsvorrichtung oder einer Gleichgeschwindigkeits-Universaltransmissionsvorrichtung oder Kegelrädern aufgebaut ist, während die ersten wechselwirkenden rotierenden elektrischen Maschinenanordnungsstrukturen (111, 121) die Lasten (141, 142) in der gleichen Drehrichtung antreiben.

14. Anordnung nach einem der Ansprüche 1 bis 12, bei der die doppelt wirkenden elektrischen Maschinen (103, 104) Rücken an Rücken installiert sind und jeweils mit dem Differentialgetriebezug (901) in wechselseitig entgegengesetzten Drehrichtungen verbunden sind, wodurch ein repulsiv ausgleichendes Treibkraftsystem gebildet wird, und wobei die individuellen zweiten wechselwirkenden rotierenden elektrischen Maschinenanordnungsstrukturen (112, 122) jeweils mit den zwei Eingangswellen des Differentialgetriebezugs verbunden sind, um eine Wechselwirkungsbeziehung mit entgegengesetzten Drehrichtungen bereitzustellen, während die ersten wechselwirkenden rotierenden elektrischen Maschinenanordnungsstrukturen (111, 121) die Lasten (141, 142) in der gleichen Drehrichtung antreiben.

15. Anordnung nach einem der Ansprüche 1 bis 12, bei der die doppelt wirkenden elektrischen Maschinen (103, 104) parallel auf der gleichen Seite installiert sind, um sich **dadurch** mit dem Differentialgetriebezug (901) in entgegengesetzten Richtungen zu vereinigen, um **dadurch** ein repulsiv ausgleichendes doppelt wirkendes elektrisches Maschinentreibsystem zu bilden.

## Revendications

1. Ensemble de machines électriques à double effet comprenant des première et seconde machines électriques à double effet (103, 104), chacune étant constituée de premières et secondes structures d'ensemble de machines électriques rotatives interactives (111, 112 et 121, 122), chaque première structure d'ensemble de machines électriques rotatives interactives étant couplée à une charge respective (141, 142), et les deux secondes structures d'ensemble de machines électriques rotatives interactives étant couplées ensemble, dans lequel les première et seconde machines électriques à double effet sont couplées ensemble par le biais d'un dispositif différentiel (151), dans lequel le dispositif différentiel est constitué par un train d'engrenages différentiel (133, 134, 135, 136 et 139) ayant un premier engrenage (133) monté sur un premier arbre de rotation (131) couplé à la première machine électrique à double effet (103), un deuxième engrenage (134) monté sur un second arbre de rotation (132) couplé à la seconde machine électrique à double effet (104), des troisième et quatrième engrenages (135, 136) montés sur des troisième et quatrième arbres de rotation respectifs (137, 138), et un cadre annulaire différentiel (139) en prise d'entraînement commune avec les troisième et quatrième arbres de rotation ;
**caractérisé par** un dispositif d'amortissement (600) au niveau d'un côté à effet différentiel du dispositif différentiel, un côté du dispositif d'amortissement étant couplé au cadre annulaire différentiel, l'autre côté du dispositif d'amortissement étant bloqué sur des éléments statiques tels qu'une carrosserie de voiture ou une coque de mécanisme.

2. Ensemble selon la revendication 1, dans lequel le dispositif différentiel (151) est tel que chaque machine électrique de type à double effet (103, 104) est couplée dos à dos au dispositif différentiel dans des directions axiales, moyennant quoi, si une des machines électriques rotatives interactives entreprend un amortissement plus grand pour entraîner une différence de vitesse de rotation, alors, en raison des caractéristiques de fonctionnement à double effet de l'ensemble de machines électriques de type à double effet, il se produit une force d'action répulsive, et de ce fait, la différence de vitesse de rotation peut être ajustée par le dispositif différentiel, et l'ensemble de machines électriques de type à double effet à entraînement différentiel répulsif est adapté pour entraîner deux roues latérales se déplaçant vers l'avant et l'arrière, et assurer une opération de braquage à entraînement différentiel dans les mêmes directions de rotation.

3. Ensemble selon la revendication 1 ou la revendication 2, comprenant en outre un dispositif d'entrée d'instructions de fonctionnement (101) destiné à générer des signaux de fonctionnement analogiques ou numériques pour commander un dispositif de commande d'entraînement (102) destiné à commander les machines électriques de type à double effet (103, 104) pour assurer une partie ou l'ensemble des fonctions suivantes : rotations positives ou inverses, changements de vitesse, fonctions de moteur, fonctions de générateur, opérations de freinage de régénération, limitations de courant d'entrée/sortie et fonctions de blocage d'effet électromagnétique.

4. Ensemble selon la revendication 3, dans lequel le dispositif d'entrée d'instructions de fonctionnement (101) est un composant électromécanique ou un composant électronique à semi-conducteurs.

5. Ensemble selon la revendication 3 ou la revendication 4, comprenant en outre un dispositif de fourniture et de stockage d'énergie (105) destiné à fournir de l'énergie par le biais du dispositif de commande d'entraînement (102) pour entraîner les machines électriques de type à double effet (103, 104) pour une opération de fonction motrice et à absorber ou stocker l'énergie des machines électriques de type à double effet pour l'opération de fonction génératrice.

6. Ensemble selon la revendication 5, dans lequel le dispositif de fourniture et de stockage d'énergie (105) est un système d'alimentation municipal, des unités génératrices entraînées par moteur, un bloc batterie ou un dispositif de génération d'énergie d'accumulateur de volant.

7. Ensemble selon l'une quelconque des revendications 3 à 6, dans lequel le dispositif de commande d'entraînement (102) est constitué par des composants d'alimentation électromécaniques et électroniques à semi-conducteurs destinés à recevoir des signaux de fonctionnement du dispositif d'entrée d'instructions de fonctionnement (101), moyennant quoi l'ensemble de machines électriques à double effet peut utiliser un dispositif de commande d'entraînement commun (102) pour entraîner les machines électriques de type à double effet (103, 104) simultanément, ou par un dispositif de commande d'entraînement individuel pour entraîner les machines électriques de type à double effet selon les exigences du système.

8. Ensemble selon l'une quelconque des revendications 3 à 7, dans lequel si l'ensemble de machine électrique de type à double effet est du type à balai CC, alors le dispositif de commande d'entraînement (102) est constitué par des composants d'alimentation électromécaniques ou électroniques à semi-conducteurs pour être un dispositif de circuit de commande des opérations de fonctions motrices ou génératrices, ou un dispositif de commande de direction de sélecteur de polarité en fournissant une commande de modulation analogique ou une commande de modulation d'onde découpée à un induit, ou une commande de modulation d'intensité magnétique de champ, ou un mélange de ceux-ci ; et, si le type d'ensemble de machines électriques de type à double effet est le type sans balai synchrone ou asynchrone, ou un type synchrone ou asynchrone à anneau de coulissement, alors le circuit d'entraînement d'un dispositif de commande d'entraînement à inverseur constitué par les composants électromécaniques ou à semi-conducteurs est employé pour commander l'ensemble de machines électriques de type à double effet pour les opérations de fonctions motrices ou génératrices.

9. Ensemble selon l'une quelconque des revendications 1 à 8, dans lequel les machines électriques de type à double effet (103, 104) sont constituées par des machines électriques à CA ou CC, sans ou avec balai, synchrones ou asynchrones, de forme cylindrique ou en forme de disque ou d'entonnoir ayant des balais à bague conductrice rotatifs (161, 162) pour l'entrée ou la sortie d'énergie ainsi que des composants associés tels que des arbres rotatifs, paliers et dispositifs de refroidissement, moyennant quoi les relations interactives entre les machines électriques de type à double effet (103, 104) et le dispositif différentiel (151) constituent le fonctionnement d'un système d'alimentation à entraînement différentiel répulsif.

10. Ensemble selon l'une quelconque des revendications 1 à 9, dans lequel les charges (141, 142) sont les roues motrices ou les chenilles motrices d'un engin de transport tel qu'un véhicule, ou d'autres charges qui sont respectivement installées sur les deux côtés d'un véhicule pour entraîner le déplacement de l'engin de transport vers l'avant ou l'arrière, ou pour des opérations de braquage à entraînement différentiel dans les mêmes directions, ou pour des sorties d'entraînement rotatif ou différentiel positives ou inverses dans différentes directions de rotation.

11. Ensemble selon l'une quelconque des revendications 1 à 10, comprenant en outre des dispositifs réducteurs de vitesse (201, 202) installés entre les arbres de sortie des machines électriques à double effet (103, 104) et les charges (141, 142).

12. Ensemble selon l'une quelconque des revendications 1 à 11, dans lequel le dispositif d'amortissement comprend des moyens d'amortissement rotatifs tels qu'une source d'énergie fluide, une source de frottement mécanique, une source de génération électromagnétique, un dispositif à courant de Foucault, ou des moyens d'amortissement rotatifs à application élastique tels qu'une source d'énergie fluide capables de stocker et de libérer de l'énergie, ou un ressort mécanique.

13. Ensemble selon l'une quelconque des revendications 1 à 12, dans lequel les machines électriques à double effet (103, 104) sont couplées au train d'engrenages différentiel (901) par un dispositif de transmission de changement de direction axiale (900) dans des directions de rotation contraires mutuelles pour constituer un système d'alimentation à entraînement différentiel répulsif, dans lequel les secondes structures d'ensemble de machines électriques rotatives interactives individuelles (112, 122) sont respectivement couplées aux deux arbres d'entrée du train d'engrenages différentiel (901) pour fournir une relation interactive de directions de rotation contraires par le biais du dispositif de transmission de changement de direction axiale (900), qui est constitué par un dispositif de transmission universel ou un dispositif de transmission universel de vitesse égale ou des pignons coniques, alors que les premières structures d'ensemble de machines électriques rotatives interactives (111, 121) entraînent les charges (141, 142) dans la même direction de rotation.

14. Ensemble selon l'une quelconque des revendications 1 à 12, dans lequel les machines électriques à double effet (103, 104) sont installées dos à dos et sont respectivement couplées au train d'engrenages différentiel (901) dans des directions de rotation contraires mutuelles, afin de constituer ainsi un système d'alimentation à entraînement différentiel répulsif, et dans lequel les secondes structures d'ensemble de machines électriques rotatives interactives (112, 122) sont respectivement couplées aux deux arbres d'entrée du train d'engrenages différentiel pour assurer une relation interactive avec des directions de rotation contraires, alors que les premières structures d'ensemble de machines électriques rotatives interactives (111, 121) entraînent les charges (141, 142) dans la même direction de rotation.

15. Ensemble selon l'une quelconque des revendications 1 à 12, dans lequel les machines électriques à double effet (103, 104) sont installées en parallèle sur le même côté, afin de se combiner ainsi avec le train d'engrenages différentiel (901) dans des directions de rotation contraires, afin de constituer ainsi un système d'alimentation de machines électriques de type à double effet à entraînement différentiel répulsif.
